Europäisches Patentamt

**European Patent Office**

**Office européen des brevets**

(19)

(11) Veröffentlichungsnummer: **0 137 303**
**B1**

(12) **EUROPÄISCHE PATENTSCHRIFT**

(45) Veröffentlichungstag der Patentschrift:
31.05.89

(51) Int. Cl.⁴: **B 21 B 37/00**

(21) Anmeldenummer: **84110555.4**

(22) Anmeldetag: **05.09.84**

(54) **Verfahren zum fortlaufenden Erfassen der Teilwalzlänge in einer kontinuierlichen Walzstrasse und Einrichtung zur Durchführung des Verfahrens.**

(30) Priorität: **14.09.83 DE 3333091**

(43) Veröffentlichungstag der Anmeldung:
**17.04.85 Patentblatt 85/16**

(45) Bekanntmachung des Hinweises auf die Patenterteilung:
**31.05.89 Patentblatt 89/22**

(84) Benannte Vertragsstaaten:
**DE FR IT SE**

(56) Entgegenhaltungen:
**CH-A-580 993**
**DD-A-87 668**
**DE-A-1 427 179**
**DE-A-2 248 177**
**DE-B-1 144 083**
**DE-B-1 240 796**
**US-A-3 415 149**

(73) Patentinhaber: **SMS SCHLOEMANN-SIEMAG AKTIENGESELLSCHAFT, Steinstrasse 13, D-4000 Düsseldorf 1 (DE)**

(72) Erfinder: **Froese, Johannes Erik, Unter Kahlenhausen 29, D-5000 Köln 1 (DE)**
Erfinder: **Esau-Klasen, Hans, Gladbacher Strasse 31, D-4150 Krefeld (DE)**
Erfinder: **Schlanzke, Claus-Georg, Heinrich Hertz-Strasse 22, D-4030 Ratingen-Eckamp (DE)**
Erfinder: **Hess, Hans-Peter, Im Kirchfeld 16, D-4018 Langenfeld (DE)**

(74) Vertreter: **Müller, Gerd, Patentanwälte HEMMERICH-MÜLLER-GROSSE-POLLMEIER-MEY Hammerstrasse 2, D-5900 Siegen 1 (DE)**

EP 0 137 303 B1

## Beschreibung

Die Erfindung betrifft ein Verfahren zum fortlaufenden Erfassen der in einer kontinuierlichen Walzstraße befindlichen Teilwalzlänge einer gegebenenfalls noch teilweise außerhalb der Walzstraße befindlichen Walzlänge und eine Einrichtung zur Durchführung des Verfahrens nach dem Oberbegriff des Anspruches 1.

Nach den DE-PS-1 240 796 und 1 427 995 sowie der DE-Literaturstelle, BBC-Mitteilungen Bd. 51, Nr. 7, Seite 438 bis 443; "Digitale Schnittlängensteuerung für Kühlbettscheren", sind bereits Verfahren zum fortlaufenden Erfassen der in einer kontinuierlichen Walzstraße befindlichen Teilwalzlänge einer gegebenenfalls noch teilweise außerhalb der Walzstraße befindlichen Walzlänge bekannt, wobei durch Impulszählung des einlaufenden Kopfstückes abhängig vom Passieren einer vorderen, einlaufseitig in der Walzstraße befindlichen ersten Meßebene und einer auslaufseitig hinter der Walzstraße befindlichen zweiten Meßebene sowie Impulsmessung der Länge des Kopfendes in einer Eichstrecke bekannter Länge und Ermittlung der Gesamtwalzlänge nach Durchlaufen der ersten Meßebene von dem Schwanzende der Walzlänge und nachfolgender Ermittlung der günstigsten Teilschnitte der Kühlbettlängen das Schnittkommando der Teilschere vorgegeben wird.

Auch in der gattungsgleichen DD-A-87 668 ist nur eine Meßstrecke hinter der Schere vorgesehen, so daß es bei dieser Verfahrensweise ebenfalls nicht gelingt, die Walzgutlänge so genau zu erfassen, daß ein Teilen der Gesamtwalzlänge in kühlbettgerechte Teillängen als Vielfache der Verkaufslängen mit tolerierbaren Längenabweichungen in der Praxis möglich ist.

Aufgabe der Erfindung ist es, die bekannten Verfahren dahingehend zu verbessern, daß eine Walzlängenermittlung und eine Optimierung hinsichtlich des Unterteilens der Walzlänge in kühlbettgerechte Teillängen unterschiedlicher Größe als Vielfache einer Verkaufslänge und Teillängen mit Reststück bereits solange in der Walzstraße hinsichtlich des der Fertiglänge proportionalen Volumens zu erfassen, daß nur noch im Bereich der Toleranzgrenzen liegende kleinere Fehlerabweichungen bei der Teillängenoptimierung möglich sind. In Weiterbildung des Verfahrens und der Einrichtung soll eine laufende Korrektur der, der noch in der Walzstraße befindlichen Teilwalzlänge proportionalen Fertiglänge, über die Dauer des Walzvorganges erfolgen.

Zur Lösung der gestellten Aufgabe wird ein Verfahren vorgeschlagen, bei welchem ab Passieren des Kopfendes in der ersten Meßebene ($S_1$) im Impulsmaßstab proportional der Walzenumfangsgeschwindigkeit der Walzen eines benachbarten Walzgerüstes die Impulsfolge fortlaufend gezählt und beim Passieren der zweiten Meßebene ($S_{11}$) die der in der Walzstraße befindlichen Walzlänge entsprechende Impulszahl zwischengespeichert wird. In einer mit der zweiten Meßebene beginnenden Eichstrecke ($S_{12}$) - ($S_{11}$) bekannter Länge ($l_E$) wird die Impulszahl der mit dem Kopfende beginnenden Fertigteillänge im gleichen Impulsmaßstab darin erfaßt und daraus die proportionale Fertiglänge errechnet. Von dem auslaufenden Kopfende werden zunächst Teillängen vorbestimmter Länge abgetrennt und nach jedem Teilschnitt die Impulszahl des in einer sich am Auslauf der Teilschere befindlichen Eichstrecke ($l_{EN}$) meßbaren Kopfendes der Fertiglänge erfaßt und aus der Folge der Eichmessungen ein Mittelwert gebildet. Bei Durchlauf des Schwanzendes der Walzlänge in der ersten Meßebene ($S_1$) wird der Impulsinhalt der Walzstraße zwischen der ersten und der zweiten Meßebene mit dem Mittelwert der einzelnen Eichwerte in der Eichstrecke zur Restfertiglänge errechnet und daraus das Schnittprogramm der letzten zu schneidenden Teillängen der Scherensteuerung vorgegeben.

Als weitere Merkmale des Verfahrens sind der ersten und der zweiten Meßebene längs der Walzstraße weitere Meßebenen mit Sensoren ($S_2$ - $S_{10}$) zuschaltbar. Deren Meßindikatoren schalten jewils bei Passieren des Kopfendes der Walzlänge Zwischenspeicher für die jeweilige Impulszahl gegenüber der ersten Meßebene und speichern diese und errechnen aus dem Differenzwert zwischen der Impulszahl, gemessen von der ersten bis zur zweiten Meßebene und dem Speicherwert der Impulszahl der jeweiligen weiteren Meßebenen den Impulsinhalt proportional dem Walzlängenvolumen von der jeweiligen weiteren Meßebene bis zur zweiten Meßebene. Dieser Wert des jeweiligen Walzlängenvolumens wird in eine entsprechende proportionale Restwalzfertiglänge umgewandelt und dem Schnittlängenoptimierer zur Errechnung des günstigsten Teilprogramms in wählbarer Kühlbettlängen als Vielfache der Verkaufslänge und Reststück vorgegeben.

Ferner kann beim Passieren des Kopfendes der Walzlänge an einem einer Schopfschere vorgeordneten Meßindikator die Impulszählung in den Hauptspeicher unterbrochen werder, welche dem Weg des Kopfendes bis zum folgenden in Förderrichtung hinter der Schopfschere liegenden Meßindikators proportionale Impulszahl als Teilstrecke gemessen und als Gesamtstrecke errechnet und dem Hauptspeicherinhalt aufaddiert. Mit dem Passieren des um das Schopfende verkürzten Kopfendes der Walzlänge an dem hinter der Schopfschere liegenden Meßindikators wird die vorher unterbrochene Impulszählung in den Hauptspeicher fortgesetzt.

Weiter kann mit dem Passieren des ersten Meßindikators durch das Schwanzende der Walzlänge in der ersten Meßebene die Impulszählung in den Hauptspeicher unterbrochen werden. Aus dem gespeicherten Impulsinhalt der noch in der Walzstraße befindlichen Walzlänge wird zwischen dem Meßindikator in der ersten Meßebene und dem Meßindikator in der zweiten Meßebene die proportionale Restfertiglänge errechnet und mit dem Mittelwert der Anzahl von errechneten Korrekturwerten multipliziert. Bei Passieren jedes weiteren Indikators längs der Walzstraße durch das Schwanzende der Walzlänge wird aus dem entsprechenden Zwischenspeicherwert der jeweiligen Restwalzlänge bis zum Meßindikator der zweiten Meßebene die jeweilige proportionale Fertiglänge multipliziert mit dem Mittelwert der Korrekturwerte errechnet und dem Rechner für das Teilprogramm vorgegeben und die Abmessungen der letzten Teillängen daraus errechnet und der Scherensteuerung vorgegeben.

Eine Einrichtung zur Durchführung des vorbeschriebenen Verfahrens eignet sich dadurch, daß der Impulsgeber als längenproportionaler Geber eingangsseitig mit den Walzen eines der ersten Walzgerüste gekuppelt ist, den Sensoren der ersten und zweiten Meßebene und der Eichstrecke ein Optimierungsrechner mit Hauptspeicher und Hauptzähler angeschlossen ist und jedem weiteren sich zwischen den zwei Meßebenen aufgestellten Sensor bzw. jeder derartigen Sensorgruppe je weitere Zwischenzähler und Zwischenspeicher zugeordnet sind, welche Teile des Optimierungsrechners bilden und der Optimierungsrechner mit dem weiteren Rechner der Steuerung der Teilschere zwecks Vorgabe der abzutrennenden Teilwalzlängen verbunden ist.

Vorteil des Verfahrens ist es, daß die Fertigwalzlänge bereits nach dem Passieren des Kopfendes am Sensor der zweiten Meßebene laufend auf Änderungen hinsichtlich der Impulszahl je Längeneinheit überwacht wird, indem aus dem jeweiligen Meßwert ein Korrekturwert für das noch in der Walzstraße befindliche walzgutvolumen gebildet wird, und die Ermittlung der proportionalen Fertiglänge daraus resultiert. Die Korrekturwerte werden über die Anzahl der Schnitte von kühlbettgerechten Teillängen als mittlerer Korrekturwert errechnet, wodurch die Fehlerquote beim laufenden Unterteilen der Walzlänge in Teillängen als ganzzahlige Vielfachlängen der Verkaufslängen zuzüglich mindestens einer vielfachlänge zuzüglich Reststück möglichst niedrig gehalten wird und außerdem eine Optimierung des Teilprogramms der Walzlänge in kühlbettgerechte Teillängen auch bezüglich der Längenabmessungen der einzelnen Teillängen sowie der Anzahl der Teillängen und der Berücksichtigung der Längenabmessung der Teillänge, an welcher sich das Reststück befindet, erfolgt. Weiter ist die Eliminierung der abgeteilten Schopfenden aus dem Ergebnis der proportionalen Fertiglängenermittlung hervorzuheben.

Schließlich wird die proportionale Fertiglänge nach dem weiteren Einziehen der Restwalzlänge in die Walzstraße und nach dem Passieren des Meßindikators der ersten Meßebene noch bei Passieren jedes weiteren Meßindikators aus dem noch in der Walzstraße befindlichen Volumen der Restwalzlänge und der Umrechnung zu sich daraus ergebender proportionaler Fertigwalzlänge noch genauer errechnet, so daß die Toleranzhaltigkeit der Teillängen sich weiter verbessert.

Ein Ausführungsbeispiel der Erfindung stellt die Zeichnung dar. Es zeigen:

Fig. 1     ein Prinzipschaltbild der Walzlängenermittlung und der Teillängenoptimierung und

Fig. 2     einen Funktionsplan der Anlage nach Fig. 1.

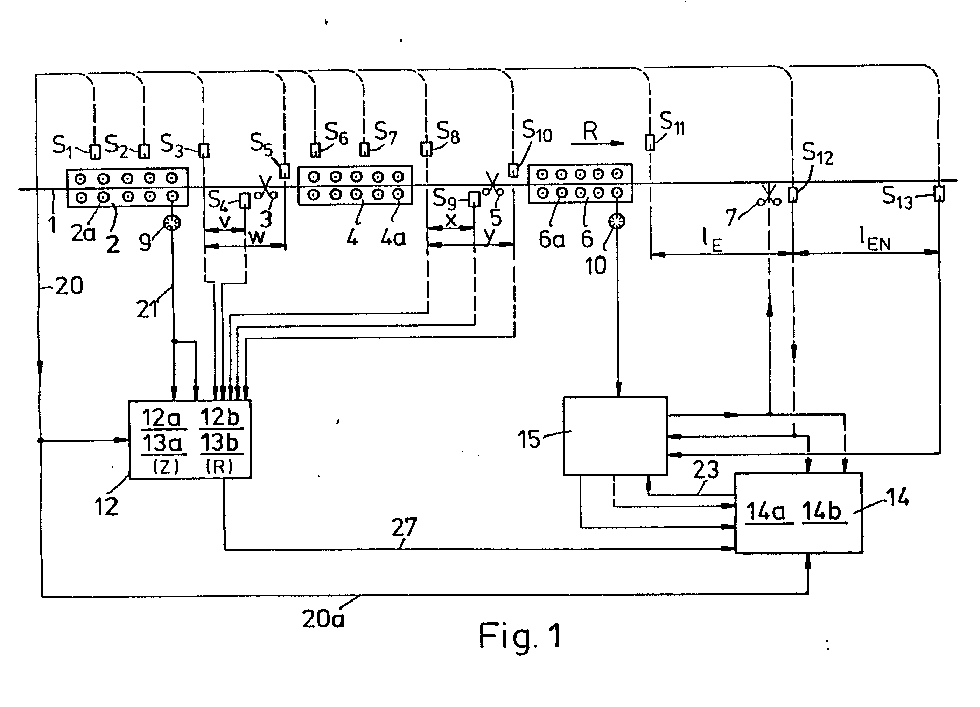

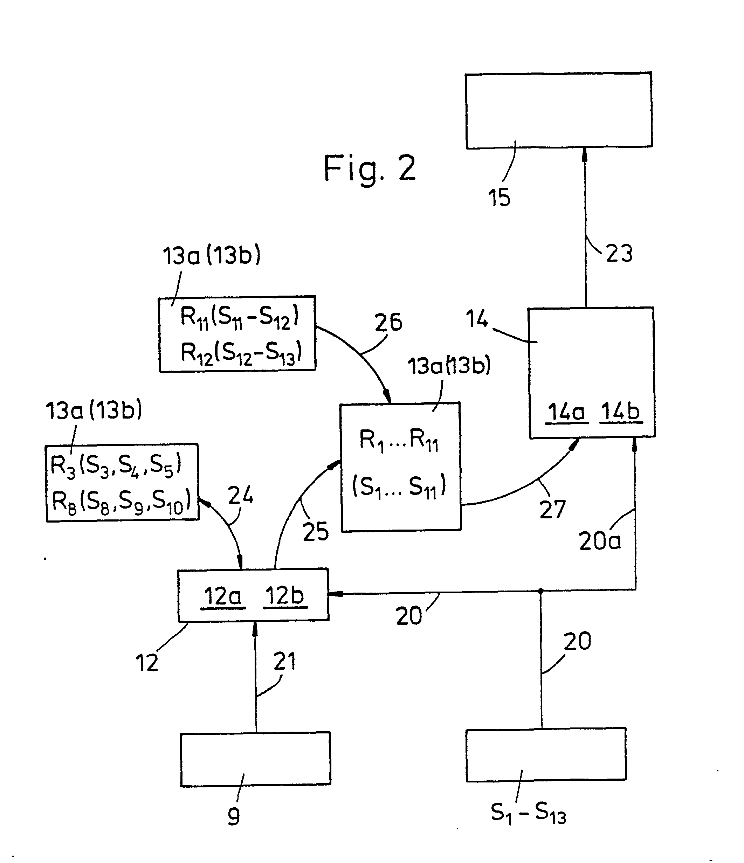

In den Fig. 1 und 2 ist mit 1 eine Walzlinie bezeichnet, in welcher Halbzeug, beispielsweise Knüppel, auf einem Förderrollgang einer Feinstahl- oder Mittelstahl-Walzstraße, beispielsweise bestehend aus einer Vorstraße 2, einer Zwischenstraße mit dazwischen angeordneter Schopfschere 3 und hinter der Zwischenstraße 4 angeordneter weiterer Schopfschere 5 und einer nachgeordneten Fertigstraße 6 und auslaufseitig hinter der Fertigstraße 6 liegender Teilschere 7, zugeführt werden. Die Walzlänge durchläuft in der Förderrichtung R die Walzstraße, wird mittels der Teilschere 7 in kühlbettgerechte Teillängen unterteilt, welche in dem weiter nicht dargestellten Auflaufrollgang vor dem Kühlbett bis zum Stillstand abgebremst oder in der Bewegung auf das Kühlbett übergefördert werden.

In der Vorstraße 2 sind Walzgerüste mit Walzensätzen 2a, in der Zwischenstraße 4 sind Walzgerüste mit Walzensätzen 4a und in der Fertigstraße 6 sind Walzgerüste mit Walzensätzen 6a in bekannter Weise angeordnet.

Längs der Walzstraße sind als Meßindikatoren, beispielsweise von dem durchlaufenden Kopf- und Schwanzende abhängig schaltbare Sensoren $S_1$ bis $S_{13}$ angeordnet, welche von einem längenproportionalen Geber, beispielsweise einem Impulsgeber 9, erzeugte Signale als Impulsfolge u. a. einem Kauptzähler HZ 12a und ggfls. einem Hauptspeicher HR 12b eines Optimierungsrechners 12 zuführen. Dem Hauptzähler KZ 12a sind eine Anzahl weiterer Zwischenzähler 13a (Z) und dem Hauptspeicher HR 12b sind eine Anzahl weiterer Zwischenspeicher 13b ($R_1$ bis $R_{13}$) zugeteilt, die zur Zählung bzw. Speicherung von Hilfswerten bzw. Zwischenwerten während der Walzlängenmessung in der Walzstraße vorgesehen und vom Rechner 12 bei Bedarf abrufbar sind. Mit 15 ist eine Scherensteuerung bezeichnet, welcher eine Impulsfolge von einem weiteren längenproportionalen Geber, beispielsweise einem Impulsgeber 10, zugeführt wird. Der Impulsgeber 10 ist beispielsweise mit dem Walzensatz 6a des letzten Walzgerüstes der Fertigstraße 6 gekuppelt und erzeugt eine der durchlaufenden Walzlänge proportionale Impulsfolge, aus der über einen weiteren Optimierungsrechner 14 mit Zählern 14a und Speichern 14b der Zeitpunkt errechnet wird, zu dem über die Scherensteuerung 15 das Schnittkommando an die Teilschere 7 gegeben wird, um jeweils eine Teillänge vorbestimmter Längenabmessung von der Walzlänge abzuteilen.

Die Erfassung der Walzlänge bzw. der Walzteillänge erfolgt wie folgt:

Das Kopfende der Walzlänge startet über den Sensor $S_1$, in der ersten Meßebene, der vorteilhafterweise einlaufseitig der Vorstraße 2 hinter dem ersten Walzensatz 2a angeordnet ist, über die Zuleitung 20 mit dem Hauptzähler 12a des Optimierungsrechners 12 verbunden ist, der eine Impulsfolge über die Zuleitung 21 vom Impulsgeber 9 erhält. Die Impulsfolge wird gleichzeitig dem Optimierungsrechner 14 über die Zuleitung 20a zugeführt.

Das durchlaufende Kopfende der Walzlänge veranlaßt über die Sensoren $S_2$, $S_3$, $S_6$, $S_7$, $S_8$, $S_{11}$ und $S_{12}$ den jeweiligen Zählerstand der Hauptzähler HZ 12a in die Zwischenspeicher $R_2$, $R_3$, $R_6$, $R_7$, $R_8$, $R_{11}$ und $R_{12}$ und den Hauptspeicher HR 12b zu übernehmen.

Nach der letzten Übernahme des Zählerstandes des Hauptzählers HZ 12a bei Passieren des Sensors $S_{12}$ durch das Kopfende der Walzlänge in den Hauptspeicher HR 12b wird durch Differenzbildung des Impulsinhaltes des Hauptspeichers HR 12b mit den Inhalten der Zwischenspeicher $R_2$, $R_3$, $R_6$, $R_7$, $R_8$, $R_{11}$ und $R_{12}$ die für jede in der Walzstraße befindliche Teilwalzlänge vom Sensor $S_1$ bis zum Sensor $S_{12}$ korrespondierende Impulsanzahl bestimmt und in die entsprechenden Zwischenspeicher R wie folgt eingegeben:

$$R_{12} (S_1 - S_{12}) \qquad - \text{ HR 12b}$$
$$R_{12} \qquad - R_2$$
$$R_{12} \qquad - R_3$$
$$\cdot \qquad\qquad \cdot$$
$$\cdot \qquad\qquad \cdot$$
$$\cdot \qquad\qquad \cdot$$
$$R_{12} \qquad - R_{11}$$

Der Zwischenspeicher $R_{12}$ beinhaltet die Impulszahl der bekannten Länge $I_E$ zwischen dem Sensor $S_{11}$ und $S_{12}$, welche eine Eichstrecke bildet. Dadurch ist beim Passieren des Sensors $S_{12}$ durch das Kopfende der Walzlänge für das zwischen den Sensoren $S_{11}$ und $S_{12}$ befindliche Stück Fertiglänge im Impulsmaßstab des Impulsgebers 9 die Anzahl der Impulse bekannt, welche das Stück Fertiglänge beinhaltet. Da die Länge der Eichstrecke $I_E$ bekannt ist, kann daraus auch die Impulszahl je Fertiglängeneinheit errechnet werden. Auch ist es dadurch möglich, die der in der Walzstraße befindliche Teilwalzlänge proportionale Fertigwalzlänge

zwischen dem Sensor $S_{12}$ und jedem in Förderrichtung R davor in der Walzstraße liegenden Sensor $S_1$ bis $S_{11}$ zu errechnen und im entsprechenden Zwischenspeicher $R_1$ bis $R_{12}$ zu speichern und bedarfsweise aus diesem abzurufen.

Die Impulslängenzuordnung des Zwischenspeichers $R_{11}$ gilt für die in diesem Moment der Längenerfassung in der Walzstraße enthaltene Teilwalzlänge.

Die Impulse des Impulsgebers 9 werden jedoch vom Hauptzähler HZ 12a solange weitergezählt, bis das Schwanzende der Walzlänge den Sensor $S_1$ in der Walzstraße erreicht hat. In diesem Moment wird der Zählvorgang der Impulse vom Impulsgeber 9 in den Hauptzähler HZ 12a gestoppt. Somit ist die von dem Hauptzähler HZ 12a gezählte Impulszahl in dem Hauptspeicher HR 12b als Impulszahl des Gesamtwalzlänge enthalten.

Nachdem die Scherensteuerung 15 zunächst nach dem Durchlauf des Kopfendes der Walzlänge durch die zwischen den Sensoren $S_{11}$ und $S_{12}$ befindliche Eichstrecke $I_E$ bekannter Länge nach einem vorgegebenen Längenmaß kühlbettgerechte Teillängen als ganzzahlige Vielfache der Verkaufslängen unterteilt, wird bei Passieren des Sensors $S_1$ die zwischen den Sensoren $S_1$ und $S_{11}$ noch in der Walzstraße befindliche Restwalzlänge bzw. die daraus sich ergebende proportionale Fertiglänge im Optimierungsrechner 12 errechnet und dem weiteren Optimierungsrechner 14 mit Zähler 14a und Speicher 14b vorgegeben. Dieser errechnet daraus unter Abfrage der betrieblichen Grenzbedingungen die Aufteilung der Restwalzlänge in Teillängen mit ganzzahligen Vielfachen der Verkaufslängen und möglichst nur einer Teillänge, die gleich lang ist wie die längste der bisher geschnittenen bzw. noch zu schneidenden Teillängen zuzüglich eines Reststückes, welches kleiner ist als eine Verkaufslänge.

Hinter der Teilschere 7 befindet sich in der zweiten Meßebene hinter der Walzstraße zwischen den Sensoren $S_{12}$ und $S_{13}$ eine zweite Meßstrecke $1_{EN}$ als Eichstrecke. Diese Meßstrecke wird vor dem ersten und nach jedem weiteren Teillängenschnitt von dem folgenden Kopfende der jeweiligen Restteillänge während des Zählvorganges des Hauptzählers HZ 12a durchlaufen.

Die zwischen den Sensoren $S_{12}$ und $S_{13}$ im Zwischenzähler HZ 12 gemessenen und im Zwischenspeicher $R_{12}$ gespeicherten Impulse als Eichwert je Kopfende werden zur jeweiligen Korrekturrechnung des Impulsinhaltes des Hauptspeichers HR 12b benutzt, um die proportionale Fertiglänge für das zwischen den Sensoren $S_1$ und $S_{11}$ in der Walzstraße befindliche Volumen der Teilwalzlänge zu ermitteln und nach jedem Teilschnitt der Teilschere 7 erneut zu korrigieren bis das Schwanzende der Walzlänge den Sensor $S_1$ passiert hat. Dazu wird nach Vorliegen und Speichern von mindestens zwei Eichwerten aus diesen der Mittelwert gebildet und jeweils mit diesem Mittelwert der folgende Vergleichswert für die der gespeicherten Teilwalzlänge entsprechende proportionale Fertiglänge errechnet und fortlaufend korrigiert.

Dadurch ist es möglich, die errechenbare proportionale Fertigwalzlänge entsprechend dem Volumen der in der Walzstraße befindlichen Teilwalzlänge den durch den Walzprozess bedingten Längenabweichungen bzw. Längenveränderungen der Fertiglänge laufend während des Teilvorganges der Walzfertiglänge an der Teilschere 7 anzupassen.

Im übrigen wird die vorbeschriebene Eichung der Restfertiglänge auch fortgesetzt, wenn sich das Schwanzende der Walzlänge nach Passieren des Sensors $S_1$ an den Sensoren $S_2$, $S_3$ $S_6$ $S_7$, $S_8$ vorbei weiter in die Walzstraße einzieht. Dann wird jedoch lediglich der Speicherinhalt der den vorgenannten Sensoren zugeordneten Zwischenspeicher $R_2$, $R_3$, $R_6$, $R_7$, $R_8$ berücksichtigt. Auch ist die Korrektur nur solange zweckdienlich, solange die errechnete proportionale Restfertiglänge im Optimierungsrechner 14 der Scherensteuerung 15 noch einen Einfluß auf das Schneidprogramm der Teilschere 7 haben kann.

Als weiteres ist die Eliminierung der beispielsweise zwischen der Vor- und Zwischenstraße 2, und der Zwischen- und Fertigstrang 4, 6 an den Schopfscheren 3, 5 abfallenden Vorderschopfenden in dem Zähl-, Speicher- und Rechenvorgang der Gesamtwalzlänge vorgesehen.

Dazu sind im Bereich der Schopfschere 3 vorgeordnete Sensoren $S_3$ und $S_4$ im Abstand der Strecke v und ein weiterer nachgeordneter Sensor $S_5$ angeordnet, der vom Sensor $S_3$ im Abstand w installiert ist.

Ebenfalls sind der Schopfschere 5 Sensoren $S_8$ und $S_9$ im Abstand x vorgeordnet und ein Sensor $S_{10}$ im Abstand y vom Sensor $S_8$ entfernt angeordnet.

Die Restendeneliminierung erfolgt beispielsweise folgendermaßen.

Bei Passieren des Sensors $S_3$ durch das Kopfende der Walzlänge wird der Zählvorgang der vom Impulsgeber 9 in den Hauptzähler HZ 12a gelangenden Impulse gestoppt, wodurch auch der Hauptspeicher HR 12b keine Impulse mehr erhält. In einem weiteren Zwischenzähler Z wird die der Strecke v entsprechende zwischen den Sensoren $S_3$ und $S_4$ entsprechende Impulsfolge des Impulsgebers 9 gezählt und zwischengespeichert. Daraus wird die für die der Strecke w bekannter Länge entsprechende Impulszahl errechnet und dem Hauptspeicher HR 12b zugeführt. Nach dem erfolgten. Vorderschopfschnitt wird von dem dem Schopfstück nachfolgenden Kopfende der Walzlänge der Sensor $S_5$ betätigt der den Impulsgeber 9 dem Hauptzähler HZ 12a mit dem Hauptspeicher HR 12b wieder zuschaltet. Damit wird die Walzlänge unter Eliminieren des Vorderschopfendes im Impulsmaßstab des Impulsgebers 9 wieder weitergezählt.

Der Schopfvorgang des Vorderschopfendes der Walzlänge an der Schopfschere 5 erfolgt mit der Impulszählung zwischen den Sensoren $S_8$ und $S_9$ entsprechend der Strecke x und der Errechnung der Impulszahl für die zwischen den Sensoren $S_8$ und $S_{10}$ befindliche Strecke y bekannter Länge sinngemäß in der vorbeschriebenen Weise, wozu ebenfalls die Zuleitung von Impulsen von den Impulsgeber 9 zu den Hauptzähler HZ 12a gestoppt wird.

Die Fig. 2 stellt einen Funktionsplan im Prinzip dar.

Mit 12 ist der Optimierungsrechner mit Hauptzähler HZ 12a und Hauptspeicher HR 12b, welchem über die Zuleitung 21 der Impulsgeber 9 als längenproportionaler Geber zuschaltbar ist. Von den als Meßindikatoren in den Meßebenen bezeichneten Sensoren $S_1$ bis $S_{13}$ werden die vom Durchlauf des Kopfendes oder des Schwanzendes ausgelösten Signale über die Zuleitungen 20 dem optimierungsrechner 12 mit Hauptzähler HZ 12a und Hauptspeicher HR 12b zugeführt und stehen ebenfalls über die Zuleitung 20a an dem weiteren Optimierungsrechner 14 mit Zähler 14a und Speicher 14b zur Restwalzlängenoptimierung an. Dieser ist über eine Zuleitung 23 mit der Scherensteuerung 15 der Teilschere 7 verbunden.

Dem Optimierungsrechner 12 sind über eine Verbindung 24 Zwischenspeicher $R_3$, $R_8$ für die Korrekturwerte beim Schopfen zugeordnet, deren Speicherinhalt vom Optimierungsrechner 12 bedarfsweise abrufbar oder eingebbar sind. Von dem Optimierungsrechner 12 besteht eine Verbindung 25 mit Zwischenspeichern $R_1$ bis $R_{10}$, welche den den Sensoren $S_1$ bis $S_{10}$ zuzuordnenden Impulsinhalten der jeweiligen proportionalen Teilwalzfertiglängen entspricht.

Den Zwischenspeichern $R_1$ bis $R_{10}$ ist über eine Verbindung 26 ein Zwischenspeicher $R_{11}$ und $R_{12}$ für die Eichwerte als Korrekturwerte der Teilwalzlänge zugeordnet, welcher laufend die zwischen den Sensoren $S_{11}$ - $S_{12}$ bzw $S_{12}$ - $S_{13}$ gemessenen Eichwerte der Walzfertiglänge auf der Strecke $l_E$ bzw. $l_{EN}$ speichert.

Die den Meßindikatoren $S_1$ bis $S_{12}$ zugeordneten, der jeweiligen proportionalen Walzfertiglänge entsprechenden Impulsinhalte der Zwischenspeicher $R_1$ bis $R_{11}$ können über eine Verbindung 27 von dem weiteren Optimierungsrechner 14 mit Zähler 14a und Speicher 14b abgefragt und über eine Verbindung 23 als Restwalzlängenoptimierung an die Schnittlängenvorgabe der Scherensteuerung 15 der Teilschere 7 gegeben werden.

Für das Ausführungsbeispiel ist die Verknüpfung der elektronischen Baueinheiten miteinander beschrieben, welche auch alternativ in einer anderen, dem Durchschnittsfachmann geläufigen Technik erfolgen kann. Die Meßindikatoren können als optische oder elektronische Sensoren oder als Laser-Meßgeräte ausgebildet sein.

## Patentansprüche

1. Verfahren zum fortlaufenden Erfassen der in einer kontinuierlichen Walzstraße (2, 4, 6) befindlichen Teilwalzlänge einer gegebenenfalls noch teilweise außerhalb der Walzstraße befindlichen Walzlänge, wobei durch Impulszählung des einlaufenden Kopfstückes abhängig vom Passieren einer vorderen, einlaufseitig in der Walzstraße befindlichen ersten Meßebene ($S_1$) und einer auslaufseitig hinter der Walzstraße befindlichen zweiten Meßebene ($S_{11}$) sowie am Auslauf einer Teilschere (7) eine Impulsmessung des Durchzuges des Kopfendes durch eine Eichstrecke ($S_{11}$ - $S_{12}$) bekannter Länge sowie Ermittlung der Gesamtwalzlänge nach Durchlaufen der ersten Meßebene von dem Schwanzende der Walzlänge und nachfolgender Ermittlung der günstigsten Teilschnitte der Kühlbettlänge und des Schnittkommandos der Teilschere vorgegeben wird, dadurch gekennzeichnet, daß

a) ab Passieren des Kopfendes in der ersten Meßebene ($S_1$) im Impulsmaßstab proportional der Walzumfangsgeschwindigkeit der Walzen (2a) eines benachbarten Walzgerüstes die Impulsfolge fortlaufend gezählt und

b) beim Passieren der zweiten Meßebene ($S_{11}$) die der in der Walzstraße befindlichen Walzlänge entsprechende Impulszahl zwischengespeichert wird,

c) in einer mit der zweiten Meßebene ($S_{11}$) beginnenden Eichstrecke ($S_{11}$ - $S_{12}$ und $S_{12}$ - $S_{13}$) bekannter Länge die Impulszahl der mit dem Kopfende beginnenden Fertigteillänge im gleichen Impulsmaßstab darin erfaßt und daraus die proportionale Fertiglänge errechnet wird,

d) von dem auslaufenden Kopfende Teillängen vorbestimmter Länge abgetrennt und

e) nach jedem Teilschnitt die Impulszahl des in einer sich am Auslauf der Teilschere (7) befindlichen Eichstrecke ($S_{12}$ - $S_{13}$) meßbaren Kopfendes der Fertiglänge erfaßt und aus der Folge der Eichmessungen ein Mittelwert gebildet wird und

f) bei Durchlauf des Schwanzendes der Walzlänge in der ersten Meßebene ($S_1$) der Impulszahl für den Walzstraßeninhalt zwischen der ersten und der zweiten Meßebene mit dem Mittelwert der einzelnen Eichwerte in der Eichstrecke zur Restfertiglänge errechnet und daraus das Schnittprogramm der letzten zu schneidenden Teillängen der Scherensteuerung (15) vorgegeben wird.

2. Verfahren nach Anspruch 1, dadurch gekennzeichnet, daß

a) der ersten und der zweiten Meßebene ($S_1$, $S_{11}$) längs der Walzstraße weitere Meßebenen mit Sensoren ($S_2$ bis $S_{10}$) zugeschaltet werden, wobei

b) deren Meßindikatoren ($S_2$ bis $S_{10}$) jeweils bei Passieren des Kopfendes der Walzlänge die jeweilige Impulszahl gegenüber der ersten Meßebene ($S_1$) abfragen und speichern und

c) dem Schnittlängenoptimierer (14; 14a, 14b) zur Errechnung des günstigsten Teilprogramms in wählbare Kühlbettlängen als Vielfache der Handelslängen und dem Reststück vorgeben.

3. Verfahren nach Anspruch 1 oder 2, dadurch gekennzeichnet, daß

a) bei Passieren des Kopfendes der Walzlänge an einem einer Schopfschere (3 bzw. 5) vorgeordneten Meßindikator ($S_3$ bzw. $S_8$) die Impulszählung (12a) in den Hauptspeicher- (12b) unterbrochen,

b) die dem Weg des Kopfendes bis zum folgenden in der Förderrichtung (R) hinter der Schopfschere (3 bzw. 5) liegenden Meßindikator ($S_5$ bzw. $S_{10}$) proportionale Impulszahl als Teilstrecke (v bzw. x) gemessen und als Gesamtstrecke (w bzw. y) errechnet und ebenfalls dem Hauptspeicher (12b) aufgegeben und

c) mit dem Passieren des um das Schopfende verkürzten Kopfendes der Walzlänge an dem hinter der Schopfschere (3 bzw. 5) liegenden Meßindikator ($S_5$, $S_{10}$) die vorher unterbrochene Impulszählung in den Hauptspeicher (12b) fortgesetzt wird.

4. Verfahren nach einem oder mehreren der vorhergehenden Ansprüche, dadurch gekennzeichnet, daß

a) mit Passieren des ersten Meßindikators ($S_1$) (Sensors) durch das Schwanzende der Walzlänge in der ersten Meßebene ($S_1$) die Impulszählung in den Hauptspeicher (12b) unterbrochen wird und

b) aus dem gespeicherten Impulsinhalt der noch in der Walzstraße befindlichen Walzlänge zwischen dem Meßindikat or ($S_1$) in der ersten Meßebene und dem Meßindikator ($S_{11}$) in der zweiten Meßebene die proportionale Restfertiglänge errechnet und

c) bei Passieren jedes weiteren Indikators ($S_2$ bis $S_{10}$) längs der Walzstraße durch das Schwanzende aus dem entsprechenden Zwischenspeicherwert der jeweiligen Restwalzlänge bis zum Meßindikator der zweiten Meßebene ($S_{11}$) die jeweilige proportionale Fertiglänge errechnet und

d) dem Rechner (14) für das Teilprogramm vorgegeben wird und die Abmessungen der letzten Teillängen daraus errechnet und der Scherensteuerung (15) vorgegeben werden.

5. Verfahren nach einem oder mehreren der vorhergehenden Ansprüche, dadurch gekennzeichnet, daß mit der zweiten Meßebene ($S_{11}$) beginnend zwei einander nachgeschaltete Eichstrecken ($S_{11}$ - $S_{12}$) und ($S_{12}$ - $S_{13}$) durchlaufen werden.

6. Einrichtung zur Durchführung des Verfahrens zum fortlaufenden Erfassen der in einer kontinuierlichen Walzstraße (2, 4, 6) befindlichen Teilwalzlänge einer Gesamtwalzlänge gemäß einem oder mehreren der vorhergehenden Ansprüche, wobei einlaufseitig in der Walzstraße in einer ersten Meßebene ($S_1$) und auslaufseitig außerhalb der Walzstraße in einer zweiten Meßebene ($S_{11}$) Sensoren zur Erfassung des Kopfendes bzw. des Schwanzendes einer Walzlänge sowie am Auslauf einer Teilschere (7) eine Eichstrecke ($l_E$) bildende Sensoren ($S_{11}$ - $S_{12}$) angeordnet sind und von einem mit dem Walzgut wegabhängig gekuppelten Impulsgeber eine Impulsfolge einem Zähl-, Rechen- und Speichergerät zugeführt und abhängig von einer Sollvorgabe ein Schnittkommando an eine Scherensteuerung (15) einer nachgeordneten Teilschere (7) erteilt wird, dadurch gekennzeichnet, daß

a) der Impulsgeber (9) eingangsseitig mit den Walzen eines der ersten Walzgerüste (2a) gekuppelt ist,

b) den Sensoren der ersten und zweiten Meßebene ($S_1$, $S_{11}$ $S_{12}$, $S_{13}$) und der Eichstrecke ein Optimierungsrechner (12) mit Hauptzähler (12a) und Hauptspeicher (12b) angeschlossen ist und

c) jedem weiteren sich zwischen den zwei Meßebenen aufgestellten Sensor bzw. jeder derartigen Sensorgruppe ($S_2$ bis $S_{10}$ je weitere Zwischenzähler (13a) und Zwischenspeicher (13b) zugeordnet sind, welche Teile des Optimierungsrechners (12) bilden und

d) der Optimierungsrechner (12) mit dem weiteren Rechner (14; 14a, 14b) der Steuerung (15) der Teilschere (7) zwecks Vorgabe der abzutrennenden Teilwalzlängen verbunden ist.

**Claims**

1. Method for the continuous detection of the partial rolled length, which is disposed in a continuous rolling train (2, 4, 6), of a rolled length which in a given case is still partially disposed outside the rolling train, wherein by pulse counting of the incoming head end in dependence on the passing by a forward measurement plane ($S_1$) situated in the rolling train at the inlet end and a second measurement plane ($S_{11}$) situated behind the rolling train at the outlet end as well at the outlet of a parting shears (7), a pulse measurement of the passage of the head end through a calibration path ($S_{11}$ - $S_{12}$) of known length as well as determination of the total rolled length after passage through the first measurement plane from the tail end of the rolled length and the cutting command of the parting shears is preset after determination of the most favourable parting cuts of the cooling bed length, characterised thereby, that

a) the pulse sequence is counted continuously from the passing of the head by the first measurement plane ($S_1$) to a pulse scale proportional to the peripheral roll speed of the rolls (2a) of a neighbouring roll stand and

b) the pulse number, which corresponds to the rolled length disposed in the rolling train, is intermediately stored on passing by the second measurement plane ($S_{11}$),

c) the pulse number of the finished partial length beginning at the head end is detected to the same pulse scale in a calibration path ($S_{11}$ - $S_{12}$ and $S_{12}$ - $S_{13}$), which is of known length and begins at the second measurement plane ($S_{11}$) and the proportional finished length is calculated therefrom,

d) partial lengths of predetermined length are severed from the issuing head end and

e) the pulse number of the head end, which is measurable in a calibration path ($S_{12}$ - $S_{13}$) situated at the outlet of the parting shears (7), of the finished length is detected after each parting cut and a mean value is formed from the sequence of the calibration measurements and

f) the pulse number for the rolling train content between the first and the second measurement plane is calculated with the mean value of the individual calibration values in the calibration path to the remaining finished length on the passage of the tail end of the rolled length in the first measurement plane ($S_1$) and the cutting program of the partial lengths, which are the last to be cut, is preset for the shears control (15).

2. Method according to claim 1, characterised thereby, that

a) further measurement planes with sensors ($S_2$ to $S_{10}$) are added along the rolling train to the first and the second measurement plane ($S_1$, $S_{11}$), wherein

b) their measurement indicators ($S_2$ to $S_{10}$) each on the passage of the head end of the rolled length interrogate and store the respective pulse number relative to the first measurement plane ($S_1$) and

c) preset it for the cutting length optimiser (14; 14a, 14b) for calculation of the most favourable parting program into selectable cooling bed lengths as multiple of the commercial lengths and the remaining piece.

3. Method according to claim 1 or 2, characterised thereby, that

a) the pulse counting (12a) into the main store (12b) is interrupted on the passage of the head end of the rolled length by a measurement indicator ($S_3$ or $S_8$) arranged in front of a cropping shears (3 or 5),

b) the pulse number, which is proportional to the travel of the head end to the following measurement indicator ($S_5$ or $S_{10}$) lying behind the cropping shears (3 or 5) in the conveying direction (R), is measured as partial path (v or x) and calculated as total path (w or y) and likewise loaded into the main store (12b) and

c) the previously interrupted pulse counting into the main store (12b) is continued on the passage of the head end, shortened by the cropped end, of the rolled length by the

measurement indicator (S₅, S₁₀) lying behind the cropping shears (3 or 5).

4. Method according to one or more of the preceding claims, characterised thereby, that

a) the pulse counting into the main store (12b) is interrupted in the first measurement plane ($S_1$) on the passage of the tail end of the rolled length by the first measurement indicator $S_1$) (sensor) and

b) the proportional remaining finished length is calculated from the stored pulse content of the rolled length still disposed in the rolling train between the measurement indicator ($S_1$) in the first measurement plane and the measurement indicator ($S_{11}$) in the second measurement and

c) the respective proportional finished length is calculated from the corresponding intermediate stored value of the respective remaining rolled length up to the measurement indicator of the second measurement plane ($S_{11}$) on the passage of the tail end by each further indicator ($S_2$ to $S_{10}$) along the rolling train and

d) is given to the computer (14) for the parting program and the dimensions of the last partial lengths are calculated therefrom and given to the shears control (15).

5. Method according to one or more of the preceding claims, characterised thereby, that starting with the second measurement plane ($S_{11}$), two calibration paths ($S_{11}$ - $S_{12}$) and ($S_{12}$ - $S_{13}$), connected one behind the other, are transversed.

6. Equipment for the performance of the method for the continuous detection of the partial rolled length, which is disposed in a continuous rolling train (2, 4, 6), of a total rolled length, according to one or more of the preceding claims, wherein sensors for the detection of the head end and the tail end of a rolled length are respectively arranged in a first measurement plane ($S_1$) in the rolling train at the inlet end and in a second measurement plane ($S_{11}$) outside the rolling train at the outlet end as well as sensors ($S_{11}$ to $S_{12}$) forming a calibration path ($I_E$) are arranged at the outlet of a parting shears (7) and a pulse sequence from a pulse generator, which is coupled with the rolled stock in dependence on travel, is fed to a counting, computing and storage device and a cutting command is imparted to a shears control (15) of a downstream parting shears (7) in dependence of a preset target, characterised thereby, that

a) the pulse generator (9) is coupled at the input side with the rolls of one of the first roll stands (2a),

b) an optimising computer (12) with main counter (12a) and main store (12b) is connected to the sensors of the first and second measurement planes ($S_1$, $S_{11}$, $S_{12}$,

$S_{13}$) and of the calibration path,

c) respective further intermediate counters (13a) and intermediate stores (13b), which form parts of the optimising computer (12), are associated with each further sensor set up between the two measurement planes or with each such sensor group ($S_2$ to $S_{10}$) and

d) the optmising computer (12) is connected with the further computer (14; 14a, 14b) of the control (15) of the parting shears (7) for the purpose of presetting the partial rolled lengths to be severed.

**Revendications**

1. Procédé de détermination en continu de la longueur de laminage partielle qui se trouve dans un train de laminoir continu (2, 4, 6) et fait partie d'une longueur de laminage qui, le cas échéant, se trouve encore en dehors du train de laminoir, dans lequel un comptage d'impulsions de l'extrémité de tête à son entrée fournit, en fonction des passages au niveau d'un premier plan de mesure ($S_1$) situé du côté de l'entrée le train de laminoir et d'un deuxième plan de mesure ($S_{11}$) situé du côté de la sortie derrière le train de laminoir ainsi qu'à la sortie d'une cisaille à tronçonner une mesure d'impulsion de l'entraînement de l'extrémité de tête sur une distance d'étalonnage ($S_{11}$ - $S_{12}$) de longueur connue et une détermination de la longueur de laminage totale après le passage de l'extrémité de queue de la longueur de laminage au niveau du premier plan de mesure et après une détermination consécutive des secteurs de tronçonnage de la longueur de refroidissement qui sont les plus avantageux et des ordres de coupe à la cisaille à tronçonner, caractérisé en ce que:

a) à partir du passáge de l'extrémité de tête au niveau du premier plan de mesure ($S_1$) le train d'impulsions est compté d'une manière continue à l'échelle des impulsions proportionnellement à la vitesse périphérique des cylindres (2a) d'une cage de laminoir voisine et:

b) au moment du passage au niveau du deuxième plan de mesure ($S_{11}$ le nombre d'impulsions correspondant à la longueur de laminage qui se trouve dans le train de laminoir est enregistré dans une mémoire de travail à accès très rapide:

c) dans une longueur d'étalonnage ($S_{11}$ - $S_{12}$ et $S_{12}$ - $S_{13}$) de grandeur connue commençant au niveau du deuxième plan de mesure ($S_{11}$), le nombre d'impulsions de la longueur de finissage qui commence à l'extrémié de tête est enregistré à la même échelle d'impulsions et est utilisé pour le calcul de la longueur de finissage proportionnelle.

d) des longueurs partielles de grandeur déterminée sont détachées par cisaillage de l'extrémité de'tête à la sortie et

e) après chaque tronçonnage le nombre d'impulsions de l'extrémité de tête mesurable de la longueur de finissage qui se trouve sur une distance d'étalonnage ($S_{12}$ - $S_{13}$) située à la sortie de la cisaille de tronçonnage (7) est déterminé et une valeur moyenne est calculée à partir de la série des mesures d'étalonnage et

f) au moment de passage au niveau du premier plan de mesure ($S_1$) de l'extrémité de queue de la longueur de laminage, le nombre d'impulsions pour le contenu du train de laminoir entre le premier et le deuxième plan de mesure est calculé avec la moyenne des différentes valeurs d'étalonnage dans la distance d'étalonnage pour l'obtention de la longueur de finissage résiduelle et le programme de cisaillage des dernières longueurs partielles à couper est envoyé au dispositif de commande (15) de la cisaille.

2. Procédé selon la revendication 1 caractérisé en ce que

a) au premier et au deuxième plan de mesure ($S_1$, $S_{11}$) s'ajoutent, le long du train de laminoir, d'autres plans de mesure comportant des organes sensibles ($S_2$ à $S_{10}$).

b) ces indicateurs de mesure ($S_2$ à $S_{10}$) interrogent et enregistrent, à chaque passage de l'extrémité de tête de la longueur de laminage, le nombre d'impulsions par rapport au premier plan-de mesure ($S_1$) et

c) l'envoient au dispositif (14, 14a, 14b) d'optimisation des longueurs de coupe pour le calcul du programme de tronçonnage le plus favorable en longueurs de refroidissement diverses, multiples des longueurs commerciales, et à la partie résiduelle.

3. Procédé selon l'une des revendications 1 ou 2 caractérisé en ce que:

a) au moment du passage de l'extrémité de tête de la longueur de laminage au niveau de l'indicateur de mesure ($S_3$ ou $S_8$) placé en avant d'une cisaille à ébouter (3 ou 5), le comptage des impulsions (12a) dans la mémoire principale est interrompu

b) le nombre d'impulsions qui est proportionnel au trajet éffectué par l'extrémité de tête jusqu'à l'indicateur de mesure suivant ($S_5$ ou $S_{10}$) situé après la cisaille à ébouter (3 ou 5) dans la direction (R) de transport est mesuré comme trajet partiel (v ou x) et calculé comme trajet total (w ou y) et envoyé également à la mémoire principale (12b)

c) au moment du passage de l'extrémité de tête de la longueur de laminage diminuée de l'extrémité d'éboutage au niveau de l'indicateur de mesure ($S_5$, $S_{10}$) situé en arrière de la cisaille à ébouter (3 ou 5), le comptage des impulsions préalablement interrompu est repris dans la mémoire principale (12b).

4. Procédé selon une ou plusieurs des revendications 1 à 3, caractérisé en ce que

a) au moment du passage de l'extrémité de queue de la longueur de laminage au niveau du premier indicateur de mesure ($S_1$) (organe sensible) dans le premier plan de mesure ($S_1$), le comptâge des impulsions dans la mémoire principale (12b) est interrompu et

b) à partir du contenu d'impulsions enregistré en mémoire pour la longueur de laminage qui se trouve encore dans le train de laminoir entre l'indicateur de mesure ($S_1$) situé dans le premier de mesure et l'indicateur de mesure ($S_{11}$) situé dans le deuxième plan de mesure, la longueur de finissage est calculée et

c) au moment du passage de l'extrémité de queue au niveau de chacun des autres indicateurs ($S_2$ à $S_{10}$) le long du train de laminoir, la longueur de finissage proportionnelle est calculée à partir de la valeur correspondante enregistrée dans la mémoire d'accès rapide pour la longueur de laminage qui reste jusqu'à l'indicateur de mesure du deuxième plan de mesure ($S_{11}$) et

d) est envoyée au calculateur (14) du programme de tronçonnage et les dimensions des dernières longueurs de tronçonnage sont calculées à partir de là et envoyées au dispositif (15) de commande de la cisaille

5. Procédé selon une ou plusieurs des revendications 1 à 4, caractérisé en ce que deux trajets d'étalonnage successifs ($S_{11}$ - $S_{12}$) et ($S_{12}$ - $S_{13}$) sont parcourus à partir du deuxième plan de mesure ($S_{11}$).

Dispositif pour l'application du procédé de détermination en continu de la longueur de laminage partielle qui se trouve dans un train de laminoir continu (2, 4, 6) et fait partie d'une longueur de laminage totale, selon une ou plusieurs des revendications 1 à 5, qui comporte du côté de l'entrée dans le train de laminoir dans un premier plan de mesure ($S_1$) et du côté de la sortie en dehors du train de laminoir dans un deuxième plan de mesure ($S_{11}$), des organes sensibles pour la détection de l'extrémité de tête ou de l'extrémité de queue d'une longueur de laminage et, à la sortie d'une cisaille de tronçonnage (7), des organes sensibles ($S_{11}$ - $S_{12}$) qui constituent un trajet d'étalonnage ($I_E$) et dans lequel un train d'impulsions provenant d'un émetteur d'impulsions couplé suivant le trajet avec le produit laminé est envoyé à un dispositif de comptage, de calcul et à mémoire et un ordre de coupe est envoyé, en fonction d'une valeur de consigne, au dispositif de commande (15) d'une cisaille de tronçonnage (7) placée à la suite, caractérisé en ce que:

a)  l'émetteur d'impulsions (9) est, du côté de l'entrée, couplé avec les cylindres de l'une des premières cages de laminoir (2a),

b)  aux organes sensibles du premier et du deuxième plan de mesure ($S_1$, $S_{11}$, $S_{12}$, $S_{13}$) et au trajet d'étalonnage sont reliés un calculateur d'optimisation (12) comportant un compteur principal (12a) et une mémoire principale (12b) et

c)  à chacun des organes sensibles et des groupes d'organes sensibles ($S_2$ à $S_{10}$) qui se trouvent entre les deux plans de mesure sont associés respectivement d'autres compteurs intermédiaires (13a) et des mémoires d'accès rapide (13b) qui font partie du calculateur d'optimisation (12) et

d)  le calculateur d'optimisation (12) est relié à l'autre calculateur (14, 14a, 14b) du dispositif de commande (15) de la cisaille de tronçonnage (7) pour indiquer les longueurs de laminage partielles qui doivent être éliminées par cisaillage.

Fig. 1

EP 0 137 303 B1

Fig. 2

13a (13b)

$R_{11}(S_{11}-S_{12})$
$R_{12}(S_{12}-S_{13})$

26

13a (13b)

13a (13b)

$R_3(S_3,S_4,S_5)$
$R_8(S_8,S_9,S_{10})$

24

$R_1...R_{11}$

$(S_1...S_{11})$

25

14

14a    14b

23

15

27

20a

12a    12b

20

20

12

21

9

$S_1 - S_{13}$